# EUROPÄISCHE PATENTSCHRIFT

(11) **EP 2 865 477 B1**
(45) Veröffentlichungstag und Bekanntmachung des Hinweises auf die Patenterteilung: **11.10.2017**
(21) Anmeldenummer: 13005988.4
(22) Anmeldetag: 20.12.2013
(51) Int. Cl.: B23K 9/32, B23K 9/173

(54) **Verfahren und Vorrichtung zum Metallschutzgasschweißen**
Method and device for for welding metal using protective gas
Procédé et dispositif de soudage sous gaz protecteur

(30) Priorität: 22.10.2013 DE 102013017591
(43) Veröffentlichungstag der Anmeldung: 29.04.2015
(73) Patentinhaber: Linde Aktiengesellschaft, 80331 München (DE)
(72) Erfinder: Heninger, Rolf, 85635 Höhenkirchen-Siegertsbrunn (DE); Siewert, Erwan, 80802 München (DE)
(74) Vertreter: Gellner, Bernd

(56) Entgegenhaltungen:
- EP-A1- 1 201 346
- DE-A1- 2 941 218
- US-A- 3 270 179
- US-A- 3 692 973

## Beschreibung

Die Erfindung betrifft ein Verfahren sowie eine Vorrichtung zum Metallschutzgasschweißen. Eine Drahtelektrode wird dabei durch einen Lichtbogen aufgeschmolzen, wobei der Lichtbogen zwischen der Drahtelektrode und einem Werkstück brennt. Ein Schutzgas wird in Form einer Schutzgasströmung zugeführt. Dabei werden beim Metallschutzgasschweißen Emissionen in Form von Emissionspartikeln freigesetzt.

### Stand der Technik

Beim Metallschutzgasschweißen (MSG-Schweißen) handelt es sich um ein Lichtbogenschweißverfahren, das beispielsweise zum Auftragsschweißen, Verschweißen oder Verlöten von ein, zwei oder mehreren Werktücken aus metallischen Werkstoffen verwendet wird. Dabei wird in einer Schutzgasatmosphäre eine Drahtelektrode in Form eines Drahtes oder eines Bandes kontinuierlich nachgeführt und durch einen Lichtbogen aufgeschmolzen, der zwischen dem Werkstück und der Drahtelektrode brennt. Das Werkstück dient dabei als zweite Elektrode. Insbesondere dient das Werkstück dabei als Kathode und die Drahtelektrode als Anode. Durch Kathodeneffekte wird das Werkstück dabei zumindest teilweise aufgeschmolzen und bildet das Schmelzbad. An ihrem Ende wird die Drahtelektrode aufgeschmolzen und es bildet sich überwiegend durch den Lichtbogen ein schmelzflüssiger Tropfen. Durch verschiedene Kräfte löst sich der Tropfen von der Drahtelektrode ab und geht in das Schmelzbad über. Dieser Prozess aus Aufschmelzen der Drahtelektrode, Bildung des Tropfens, Ablösen des Tropfens und Interaktion des Tropfens mit dem Werkstück wird als Werkstoffübergang bezeichnet.

Beim Metallschutzgasschweißen wird eine Vielzahl an Emissionen in Form von Gas, Strahlung und Schweißrauch freigesetzt. Schweißrauch bezeichnet dabei partikelförmige Schadstoffe (im Folgenden als Emissionspartikel bezeichnet). Derartige Emissionspartikel werden insbesondere durch ein Verdampfen der Drahtelektrode freigesetzt. Die Emissionspartikel, zumeist Metalloxide, sind zumeist Aerosole, welche einen Durchmesser von weniger als 100 nm besitzen. Die Emissionspartikel zählen somit zu einatembaren Partikeln, welche durch Mund und Nase in den Körper gelangen können, aber auch über die Haut aufgenommen werden können. Darüber hinaus sind die Emissionspartikel alveolengängig Partikel, d.h. die Emissionspartikel können beim Einatmen bis zu den Alveolen (Lungenbläschen) vordringen. Die Emissionspartikel können insbesondere toxisch und/oder krebserzeugend sein. Auch aufgrund einer schlechten Löslichkeit sind diese Emissionspartikel daher besonders gesundheitsschädlich für einen Schweißer.

Um die Belastungen und das Gesundheitsrisiko des Schweißers zu reduzieren, können Atemmasken genutzt oder die Emissionspartikel können mittels Absaugbrennern abgesaugt werden. Absaugbrenner besitzen jedoch große Nachteile. Absaugbrenner bedingen eine unhandlichere Bauform und stark eingeschränkte Zugänglichkeit. Des Weiteren wird die Handhabung für den Schweißer erheblich erschwert. Zudem sind die ultrafeinen Emissionspartikel häufig nicht durch einfache Filter abzuscheiden. Darüberhinaus fließen die Emissionspartikel zumeist dicht über der Werkstoffoberfläche ab und können kaum oder überhaupt nicht von dem Absaugbrenner erfasst werden.

Eine Vorrichtung mit allen Merkmalen des Oberbegriffs des Anspruchs 12 wird in der DE-A-29 41 218 offenbart. Der Erfindung liegt daher die Aufgabe zu Grunde, das Gesundheitsrisiko für den Schweißer beim Metallschutzgasschweißen aufgrund freigesetzter Emissionspartikel zu reduzieren.

### Offenbarung der Erfindung

Diese Aufgabe wird durch ein Verfahren und eine Vorrichtung zum Metallschutzgasschweißen mit den Merkmalen der unabhängigen Patentansprüche gelöst. Bei einem erfindungsgemäßen Verfahren wird eine Drahtelektrode durch einen Lichtbogen aufgeschmolzen, wobei der Lichtbogen zwischen der Drahtelektrode und einem Werkstück brennt. Ein Schutzgas wird in Form einer Schutzgasströmung zugeführt. Erfindungsgemäß wird mindestens ein Strömungsgradient in Richtung des Werkstücks zur Agglomeration der Emissionspartikel erzeugt. Weitere Ausgestaltungen ergeben sich aus den Unteransprüchen sowie der nachfolgenden Beschreibung.

Die beim Metallschutzgasschweißen freigesetzten Emissionspartikel entstehen insbesondere durch Verdampfen der Drahtelektrode. Derartige Emissionspartikel sind insbesondere feine oder ultrafeine Partikel und besitzen einen Durchmesser von insbesondere weniger als 1 µm, weiter insbesondere von weniger als 100 nm. Die Emissionspartikel sind somit einatembar und alveolengängig und stellen ein erhebliches Gesundheitsrisiko für den Schweißer dar. Insbesondere sind die Emissionspartikel giftig und krebserzeugend. Die Emissionspartikel verursachen insbesondere beim Einatmen, Verschlucken oder Aufnahme über die Haut beim Menschen akute oder chronische Gesundheitsschäden. Die Emissionspartikel sind überwiegend gesundheitsschädliche Stoffe, die in die Gefahrenbezeichnung "Xn" eingestuft sind. Insbesondere sind die Emissionspartikel Stoffe, die giftig (Gefahrenbezeichnung "T") oder gar sehr giftig (Gefahrenbezeichnung "T+") sind. Derartige Stoffe führen in geringer oder gar sehr geringer Menge bei Einatmen, Verschlucken oder Aufnahme über die Haut zum Tode oder verursachen akute oder chronische Gesundheitsschäden.

### Vorteile der Erfindung

Erfindungsgemäß werden die Emissionspartikel agglomeriert bzw. eine Agglomeration der Emissionspartikel angeregt. Die Emissionspartikel kollidieren, bleiben aneinander haften und verbinden sich somit zu Agglomeraten (als Agglomerate werden im Folgenden agglomerierte Emissionspartikel bezeichnet). Bereits eine geringe Größenzunahme führt dazu, dass die Emissionspartikel absinken und nicht mehr in den Atembereich des Schweißers gelangen Die Agglomerate können insbesondere einen mindestens zehnmal größeren Durchmesser als die einzelnen Emissionspartikel und somit eine gesundheitlich unkritische Größe besitzen.

Die einatembaren, alveolengängigen Emissionspartikel werden somit zu größeren Partikeln agglomeriert, welche nicht mehr alveolengängig sind, insbesondere sogar nicht mehr einatembar sind. Des Weiteren ist die Größe dieser Agglomerate dabei derart, dass die Agglomerate durch die Schwerkraft "absacken" und sich am Werkstück niederschlagen. Die Gefahr, dass Emissionspartikel von einem Schweißer eingeatmet werden, wird durch die Erfindung erheblich reduziert. Somit kann ein Gesundheitsrisiko beim Metallschutzgasschweißen deutlich reduziert und die Arbeitssicherheit erhöht werden.

Durch die Erfindung wird das Gesundheitsrisiko beim Metallschutzgasschweißen von sämtlichen Stoffen reduziert. Durch die abschmelzende Drahtelektrode wird dem Schmelzbad ein Zusatzwerkstoff zugeführt. Oftmals werden als Zusatzwerkstoff Stoffe wie insbesondere Chrom, Nickel und/oder Mangan genutzt. Diese Zusatzwerkstoffe sind Bestandteile der Drahtelektrode und werden mit dieser aufgeschmolzen. Allerdings können diese Stoffe auch verdampfen und als Emissionspartikel freigesetzt werden. Dabei werden beispielsweise Emissionspartikel wie Manganoxide, Nickeloxide und/oder Chrom(VI)-Verbindungen freigesetzt. Manganoxide sind toxisch und/oder toxisch-irritativ, Mangan steht in Verdacht, Parkinson auszulösen. Mangan ist allerdings ein wichtiger Zusatzwerkstoff, insbesondere beim Metallschutzgasschweißen von Baustahl. Nickeloxide und Chrom(VI)-Verbindungen sind krebserzeugend. Chrom und Nickel sind insbesondere wichtige Zusatzwerkstoffe beim Metallschutzgasschweißen von hochlegiertem Stahl. Durch die Erfindung können derartige Stoffe bedenkenlos beim Metallschutzgasschweißen als Zusatzwerkstoff genutzt werden und Gesundheitsrisiken können dennoch deutlich reduziert werden.

Gemäß einer vorteilhaften Ausgestaltung der Erfindung wird eine Gasströmung mit dem mindestens einen Strömungsgradient in Richtung des Werktstücks zur Agglomeration der Emissionspartikel zugeführt wird. Insbesondere wird dabei ein Gas in Form der Gasströmung mit dem mindestens einem Strömungsgradienten zur Agglomeration der Emissionspartikel zugeführt. Die Gasströmung strömt insbesondere von einem Schweißbrenner in Richtung des Werkstücks hin. Insbesondere wird die Gasströmung in Form eines Gasvorhangs zwischen dem Schweißbrenner und dem Werkstück zugeführt. Durch die Gasströmung bzw. den Strömungsgradienten der Gasströmung werden die Emissionspartikel zur Kollision gebracht und agglomerieren. Im Folgenden sei unter "Gasströmung", soweit nicht anders bezeichnet, die Gasströmung zur Agglomeration der Emissionspartikel verstanden.

Die Gasströmung kann dabei eine laminare Gasströmung sein. Dabei strömt die Gasströmung, ohne dass es zu Turbulenzen (Verwirbelungen bzw. Querströmungen) kommt. Der Strömungsgradient kann dabei insbesondere durch eine abnehmende Geschwindigkeit der Gasströmung vom Schweißbrenner zu dem Werkstück hin ausgebildet sein. Die Gasströmung kann auch eine turbulente Gasströmung sein, in der Turbulenzen auftreten. Durch die Turbulenzen wird der Effekt der Kollision und Agglomeration der Emissionspartikel verstärkt. Eine derartige turbulente Gasströmung weist insbesondere mehrere Strömungsgradienten auf. Diese Strömungsgradienten beschreiben insbesondere lokale Turbulenzen in der Gasströmung. Insbesondere können diese lokalen Turbulenzen auch durch einen (globalen) Strömungsgradient beschrieben werden.

Insbesondere können Argon, Kohlendioxid, Argon, Kohlendioxid, Sauerstoff, Helium und Wasserstoff oder ein Gemische derselben in Form der Gasströmung zugeführt werden. Auch Wassernebel oder Wasserdampf kann in Form der der Gasströmung zugeführt werden. Wasserstoff zeigt zudem den Effekt, dass die Emissionspartikel nicht oxidieren. Die ist insbesonder bei Stoffen wichtig, welche erst durch die Oxidation zur Bildung von giftigen/toxischen bzw. gesundheitsschädlichen Emissionspartikeln führen, beispielsweise zur Bildung von Cr(VI).

In einer vorteilhaften Ausgestaltung der Erfindung weist die Gasströmung zur Kondensation der agglomerierten Emissionspartikel mindestens einen Temperaturgradienten auf. Somit werden die Emissionspartikel einerseits zunächst zu größeren Agglomeraten agglomeriert und andererseits kondensieren diese Agglomerate letztendlich, insbesondere an dem Werkstück und/oder dem Schweißbrenner. Des Weiteren wird durch den Temperaturgradienten die Agglomeration der Emissionspartikel beschleunigt. Die Agglomerate sind zwar insbesondere nicht mehr alveolengängig, aber gegebenenfalls immer noch einatembar. Durch die Kondensation der Agglomerate kann die Gefahr, dass Emissionspartikel bzw. Agglomerate von einem Schweißer eingeatmet werden, weiter reduziert werden. Durch Agglomerieren und Kondensieren der Emissionspartikel wird erreicht, dass keine oder zumindest kaum Emissionspartikel von dem Schweißer eingeatmet werden. Das Gesundheitsrisiko beim Metallschutzgasschweißen wird somit nochmals deutlich reduziert und die Arbeitssicherheit weiter erhöht.

Vorzugsweise wird der mindestens eine Temperaturgradient dadurch erzeugt, dass die Gasströmung auf das Werkstück gebracht wird. Insbesondere wird die Gasströmung in Form eines Gasvorhangs von dem Schweißbrenner auf das Werkstück gebracht bzw. zugeführt. Somit wird der Temperaturgradient insbesondere durch den Gasvorhang erzeugt. Das Gas bzw. die Gasströmung wird insbesondere durch den Lichtbogen erwärmt. Da das Werkstück kälter ist als der Lichtbogen, kühlt sich das Gas bzw. die Gasströmung ab, wenn die Gasströmung auf das Werkstück gebracht wird, wodurch der Temperaturgradient erzeugt wird. Insbesondere wird die Gasströmung über die (vergleichsweise kalte) Oberfläche des Werkstücks geführt. Dabei wird der Temperaturgradient weiter erhöht und das Gas bzw. die Gasströmung kann sich weiter abkühlen. Der Effekt der Kondensation der Agglomerate wird dadurch weiter verstärkt.

Bevorzugt wird die Gasströmung auf gekühlte Bereiche des Werkstücks gebracht. Diese gekühlten Bereiche können einerseits auf natürliche Weise von selbst entstehen, beispielsweise dadurch, dass die Temperatur des Werkstücks von einer Schweißnaht bzw. einem Schmelzbad ausgehend abnimmt. Andererseits können die gekühlten Bereiche auch gezielt erzeugt werden, indem die entsprechenden Bereiche aktiv gekühlt werden.

Vorzugsweise werden die gekühlten Bereiche des Werkstücks mittels einer zusätzlichen Kühlgasströmung (aktiv) gekühlt bzw. erzeugt. Dazu wird ein zweckmäßiges Kühlgas in Form der Kühlgasströmung den entsprechenden Bereichen des Werkstücks zugeführt. Die Kühlgasströmung kann dabei von oben oder von unten auf das Werkstück zugeführt werden. Insbesondere kann die Kühlgasströmung auch durch den Schweißbrenner zugeführt werden. Insbesondere wird das Werkstück dabei in einem Bereich um die Schweißnaht herum gekühlt. Da die Gasströmung für die Agglomeration zweckmäßig in Bereichen um die Schweißnaht herum dem Werkstück zugeführt wird, bietet es sich besonders an, diese Bereiche des Werkstücks zu kühlen. Bevorzugt wird das Werkstück dabei in einem Bereich von 300 mm um die Schweißnaht herum gekühlt.

Die Kühlgasströmung kann insbesondere mittels einer zweckmäßigen Düse (im Folgenden als Kühlgasdüse bezeichnet) zugeführt werden. Die Kühlgasdüse kann dabei ein Teil des Schweißbrenners bzw. der Vorrichtung zum Metallschutzgasschweißen sein. Alternativ oder zusätzlich kann die Kühlgasdüse auch ein separates Bauteil sein, wobei die Kühlgasströmung unabhängig von dem Schweißbrenner dem Werkstück zugeführt wird. Insbesondere liegt das Kühlgas zunächst in flüssigem Aggregatzustand vor. Das Kühlgas wird (insbesondere an der Kühlgasdüse) entspannt, wodurch es weiter abkühlt. Bevorzugt wird Kohlendioxid für die Kühlgasströmung genutzt, das bei Entspannung von flüssigem Aggregatszustand in den festen und gasförmigen Zustand übergeht.

In einer vorteilhaften Ausgestaltung wird ein Temperaturgradient dadurch erzeugt, dass eine Kühlfläche in die Gasströmung und/oder in die Schutzgasströmung eingebracht wird. Insbesondere wird die Kühlfläche in die Nähe einer Düse des Schweißbrenners eingebracht, insbesondere in die Nähe einer Schutzgasdüse zum Zuführen der Schutzgasströmung. Die Agglomerate werden dabei zu dieser Kühlfläche hingezogen, insbesondere mittels einer Partialdruck- und Temperaturdifferenz, und kondensieren auf der Kühlfläche. Somit kann der Effekt der Kondensation der Emissionspartikel bzw. der Agglomerate beschleunigt werden. Die Kühlfläche kann als Teil des Schweißbrenners oder als zusätzliches separates Bauteil ausgebildet sein. Insbesondere ist die Kühlfläche derart angeordnet, dass sie im Wesentlichen in Kontakt mit dem Schutzgas in Form der Schutzgasströmung tritt. Somit wird vermieden, dass eine Kondensation von Luftfeuchtigkeit aus der Umgebung des Schweißbrenners stattfindet.

Bevorzugt wird eine Oberfläche eines Wärmetauschers bzw. eines Kühlkörpers als Kühlfläche verwendet. Der Wärmetauscher weist dabei insbesondere ein System aus Kühlleitungen auf, wobei dieses System insbesondere zum Lichtbogen hin geschlossen ist. In den Kühlleitungen wird eine zweckmäßige Kühlflüssigkeit, insbesondere flüssiges Kohlendioxid, entspannt. Dabei geht sich die Kühlflüssigkeit sowohl in festen als auch gasförmigen Aggregatszustand über. Dieses Gas verlässt die Kühlleitungen, ohne dabei den Lichtbogen zu stören.

Vorzugsweise wird die Schutzgasströmung ringförmig um die Drahtelektrode herum in Richtung des Werkstücks zugeführt. Der Schweißbrenner bzw. die Vorrichtung zum Metallschutzgasschweißen weist dafür eine entsprechende Schutzgasdüse auf, welche ringförmig um die Drahtelektrode herum angeordnet ist. Bevorzugt wird die Gasströmung ebenfalls ringförmig um die Drahtelektrode herum in Richtung des Werkstücks zugeführt. Weiter bevorzugt ist die Gasströmung dabei von der Schutzgasströmung umgeben. Alternativ kann auch die Schutzgasströmung von der Gasströmung umgeben sein. Der Schweißbrenner weist dafür eine Gasströmungsdüse auf. Insbesondere sind die Gasströmungsdüse und die Schutzgasdüse derart angeordnet, dass sie die Drahtlektrode konzentrisch umfassen. Durch das Zuführen der Gasströmung mittels einer derartigen Gasströmungsdüse kann insbesondere eine Größe des Schweißbrenners im Wesentlichen beibehalten werden. Des Weiteren bleibt somit ebenfalls eine Rotationssymmetrie des Metallschutzgasschweißens bzw. des Schweißbrenners erhalten.

Vorteilhafterweise wird der mindestens eine Strömungsgradient durch Ultraschall erzeugt. Insbesondere werden durch Ultraschall Schwingungen in der Gasströmung und der darin befindlichen Emissionspartikel angeregt. Dadurch kommt es zu häufigeren Kollisionen der Emissionspartikel. Somit kann der Effekt der Agglomeration der Emissionspartikel beschleunigt werden. Dafür ist insbesondere eine entsprechende Vorrichtung zum Erzeugen von Ultraschall an einem Brennerkopf des Schweißbrenners bzw. der Vorrichtung zum Metallschutzgasschweißen angeordnet. Insbesondere wird Wasserdampf zugeführt. Durch den Ultraschall wird dieser Wasserdampf vernebelt.

Die Erfindung betrifft weiterhin eine entsprechende Vorrichtung zum Metallschutzgasschweißen. Ausgestaltungen dieser erfindungsgemäßen Vorrichtung ergeben sich aus der obigen Beschreibung des erfindungsgemäßen Verfahrens in analoger Art und Weise.

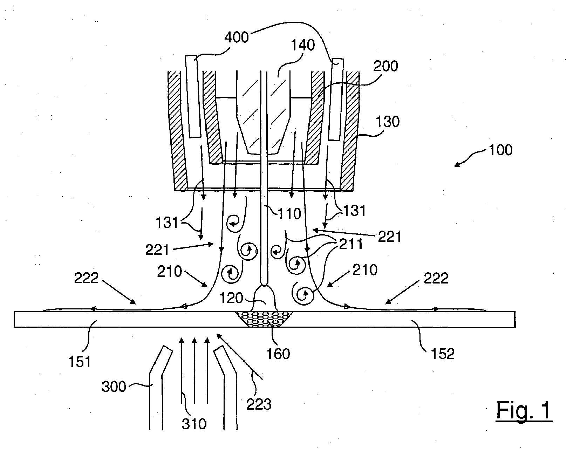

Die Erfindung und ihre Vorteile werden nun anhand der beigefügten Zeichnung weiter erläutert. In dieser zeigt
- Figur 1: schematisch eine bevorzugte Ausgestaltung einer erfindungsgemäßen Vorrichtung zum Metallschutzgasschweißen, die dazu eingerichtet ist, eine Ausführungsform eines erfindungsgemäßen Verfahrens durchzuführen.

In Figur 1 ist ein Schweißbrenner als eine Vorrichtung zum Metallschutzgasschweißen (MSG-Schweißbrenner) schematisch dargestellt und mit 100 bezeichnet.

Mittels des MSG-Schweißbrenners 100 wird durch einen Fügevorgang ein erstes Werkstück 151 mit einem zweiten Werkstück 152 verschweißt. Das MSG-Schweißgerät 100 weist eine stromführende Drahtelektrode 110 in Form eines Drahts auf, der von einer Stromkontakthülse 140 umschlossen ist. Zwischen dem ersten Werkstück 151 und der Stromkontakthülse 140 ist eine elektrische Spannung angelegt (nicht dargestellt). Über die Stromkontakthülse 140 fließt elektrischer Strom in die Drahtelektrode 110.

Ein Lichtbogen 120 wird durch Kontaktzündung initiiert und brennt zwischen der stromführenden Drahtelektrode 110 und dem ersten Werkstück 151. Durch die hohen Temperaturen wird die Drahtelektrode 110 an ihrer Spitze aufgeschmolzen. Somit bildet sich ein Tropfen aufgeschmolzenen Drahts. Letztendlich löst sich der Tropfen von der Drahtelektrode 110, geht in ein Schmelzbad 160 über und bildet die Schweißnaht (Fügeverbindung zwischen den Werkstücken 151 und 152). Der Draht 110 wird dabei kontinuierlich nachgeführt. Die Bildung des Tropfens sowie das Ablösen des Tropfens von der Drahtelektrode 110 und der Übergang in das Schmelzbad 160 werden als Werkstoffübergang bezeichnet. Der MSG-Schweißbrenner 100 weist weiterhin eine Schutzgasdüse 130 auf, um Schutzgas (in Menge und Zusammensetzung konstant) in Form einer Schutzgasströmung zuzuführen, angedeutet durch Bezugszeichen 131.

Durch einen konzentrierten Ansatz des Lichtbogens 120 an der Drahtelektrode 110 wird der Werkstoffübergang der Drahtelektrode 110 ermöglicht. Dabei kann es zu einer Überhitzung der Drahtelektrode 110 kommen und die Drahtelektrode 110 kann verdampfen. Insbesondere durch Verdampfen der Drahtelektrode 110 werden Emissionen in Form von Emissionspartikeln freigesetzt. Um zu verhindern, dass diese Emissionspartikel von einem Schweißer eingeatmet werden, weist der MSG-Schweißbrenner 100 eine Gasströmungsdüse 200 und eine Vorrichtung zur Erzeugung von Ultraschall 400 auf.

Mittels der Gasströmungsdüse 200 wird eine Gasströmung 210 von dem MSG-Schweißbrenner 100 in Richtung des Werkstücks 151 bzw. 152 zugeführt. Die Gasströmung 210 ist insbesondere eine turbulente Gasströmung 210. Die Gasströmung 210 weist dabei Turbulenzen 211 auf. Durch die Turbulenzen 211 weist die Gasströmung 210 mindestens einen Strömungsgradienten auf.

Alternativ oder zusätzlich können die dabei Turbulenzen 211 und somit der mindestens eine Strömungsgradient auch durch die Vorrichtung zur Erzeugung von Ultraschall 400 erzeugt werden.

Die Schutzgasdüse 130 und die Gasströmungsdüse 200 sind insbesondere ringförmig ausgebildet und konzentrisch um die Drahtelektrode 110 herum angeordnet. Somit werden die Schutzgasströmung 131 und die Gasströmung 210 ringförmig um die Drahtelektrode 110 herum in Richtung des Werkstücks 151 bzw. 152 zugeführt. Insbesondere umgibt die Schutzgasdüse 130 dabei die Gasströmungsdüse 200. Somit umgibt die Schutzgasströmung 131 insbesondere die Gasströmung 210. Insbesondere wird die Gasströmung 210 in Form eines Gasvorhangs zwischen dem MSG-Schweißbrenner 100 und dem Werkstück 151 bzw. 152 zugeführt.

Durch die turbulente Gasströmung 210 werden die Emissionspartikel zur Kollision gebracht. Dadurch können die Emissionspartikel aneinander haften bleiben und zu größeren Agglomeraten agglomerieren. Insbesondere findet dieser Prozess des Agglomerierens der Emissionspartikel in einem ersten Bereich 221 zwischen MSG-Schweißbrenner 100 und Werkstück 151 bzw. 152 statt.

In einem zweiten Bereich 222 wird die Gasströmung 210 auf das Werkstück 151 bzw. 152 gebracht. Da die Temperatur des Werkstücks 151 bzw. 152 mit zunehmender Entfernung von dem Schmelzbad 160 abnimmt, kann ein Temperaturgradient der Gasströmung 210 erzeugt werden. Durch den Temperaturgradienten und die abnehmende Temperatur der Gasströmung 210 kondensieren die Agglomerate in dem Bereich 222 an dem Werkstück 151 bzw. 152.

Das Werkstück 151 bzw. 152 kann zusätzlich aktiv gekühlt werden, um einen stärkeren Temperaturgradienten der Gasströmung 210 zu erzeugen. Dazu kann insbesondere eine Kühlgasdüse 300 vorhanden sein. In Figur 1 ist beispielhaft eine Kühlgasdüse dargestellt, um das Werkstück 151 aktiv in einem dritten Bereich 223 zu kühlen. Der dritte Bereich 223 ist dabei insbesondere ein Bereich von 300 mm um das Schmelzbad 160 bzw. um die Schweißnaht herum. Dazu führt die Kühlgasdüse 300 ein zweckmäßiges Kühlgas, insbesondere Kohlendioxid, in Form einer Kühlgasströmung 310 dem dritten Bereich 223 zu.

Die Kühlgasdüse 300 gemäß Figur 1 ist unterhalb des Werkstücks 151 angeordnet und führt die Kühlgasströmung 310 beispielhaft von unten dem Werkstück 151 zu. Alternativ oder zusätzlich kann die Kühlgasdüse 300 auch oberhalb des Werkstücks 151 angeordnet sein. Alternativ oder zusätzlich kann die Kühlgasdüse 300 auch in dem MSG-Brenner 100 angeordnet sein und insbesondere (analog zu der Schutzgasdüse 130 und der Gasströmungsdüse 200) konzentrisch um die Drahtelektrode 110 herum angeordnet sein.

### Bezugszeichenliste

- 100: MSG-Schweißbrenner
- 110: Drahtelektrode
- 120: Lichtbogen
- 130: Schutzgasdüse
- 131: Schutzgasströmung
- 140: Stromkontakthülse
- 151: Werkstück
- 152: Werkstück
- 160: Schmelzbad
- 200: Gasströmungsdüse
- 210: Gasströmung
- 211: Turbulenzen
- 221: erster Bereich
- 222: zweiter Bereich
- 223: dritter Bereich
- 300: Kühlgasdüse
- 310: Kühlgasströmung

## Patentansprüche

1. Verfahren zum Metallschutzgasschweißen,
- wobei eine Drahtelektrode (110) durch einen Lichtbogen (120) aufgeschmolzen wird,
- wobei der Lichtbogen (120) zwischen der Drahtelektrode (110) und einem Werkstück (151) brennt,
- wobei ein Schutzgas in Form einer Schutzgasströmung (131) zugeführt wird,
- wobei beim Metallschutzgasschweißen Emissionen in Form von Emissionspartikeln freigesetzt werden,
**dadurch gekennzeichnet, dass**
- eine Gasströmung (210) mit mindestens einem Strömungsgradienten in Richtung des Werkstücks (151) zur Agglomeration der Emissionspartikel zugeführt wird, wobei der Strömungsgradient durch Ultraschall erzeugt wird und lokale Turbulenzen in der Gasströmung beschreibt.

2. Verfahren nach Anspruch 1, wobei die Gasströmung (210) mindestens einen Temperaturgradienten zur Kondensation der agglomerierten Emissionspartikel aufweist.

3. Verfahren nach Anspruch 2, wobei ein Temperaturgradient dadurch erzeugt wird, dass die Gasströmung (210) auf das Werkstück (151) gebracht wird.

4. Verfahren nach Anspruch 3, wobei die Gasströmung (210) auf gekühlte Bereiche (223) des Werkstücks (151) gebracht wird.

5. Verfahren nach Anspruch 4, wobei die gekühlten Bereiche (223) des Werkstücks (151) mittels einer Kühlgasströmung (310) gekühlt werden.

6. Verfahren nach Anspruch 5, wobei für die Kühlgasströmung (310) Kohlendioxid verwendet wird.

7. Verfahren nach einem der Ansprüche 4 bis 6, wobei das Werkstück (151) in einem Bereich (223) einer Schweißnaht gekühlt wird, insbesondere in einem Bereich (223) von 300 mm um die Schweißnaht herum.

8. Verfahren nach einem der Ansprüche 2 bis 7, wobei ein Temperaturgradient dadurch erzeugt wird, dass eine Kühlfläche in die Gasströmung (210) zur Agglomeration der Emissionspartikel oder in die Schutzgasströmung (131) eingebracht wird.

9. Verfahren nach Anspruch 8, wobei eine Oberfläche eines Wärmetauschers als Kühlfläche verwendet wird.

10. Verfahren nach einem der vorstehenden Ansprüche, wobei die Schutzgasströmung (131) ringförmig um die Drahtelektrode (110) herum in Richtung des Werkstücks (151) zugeführt wird.

11. Verfahren nach Anspruch 10, wobei die Gasströmung (210) zur Agglomeration der Emissionspartikel ringförmig um die Drahtelektrode (110) herum, umgeben von der Schutzgasströmung (131) in Richtung des Werkstücks (151) zugeführt wird.

12. Vorrichtung zum Metallschutzgasschweißen, aufweisend
- eine Drahtelektrode (110),
- eine Schutzgasdüse (130), die dazu eingerichtet ist, ein Schutzgas in Form einer Schutzgasströmung (131) zuzuführen,
- wobei durch das Metallschutzgasschweißen Emissionen in Form von Emissionspartikeln freigesetzt werden,
**dadurch gekennzeichnet, dass**
die Vorrichtung Mittel umfasst, die dazu eingerichtet sind, mindestens einen Strömungsgradienten in Richtung eines Werkstücks (151) zur Agglomeration der Emissionspartikel zu erzeugen und eine Gasströmungsdüse (200) aufweist, die dazu eingerichtet ist, eine Gasströmung (210) mit dem mindestens einen Strömungsgradienten in Richtung eines Werkstücks (151) zuzuführen, aufweisend Mittel zum Erzeugen von Ultraschall, wobei durch den erzeugten Ultraschall der mindestens eine Strömungsgradient erzeugt wird.

13. Vorrichtung nach Anspruch 12, wobei die Vorrichtung einen Kühlkörper aufweist, der derart angeordnet ist, dass er im Wesentlichen mit der Schutzgasströmung (131) und/oder mit der Gasströmung (210) zur Agglomeration der Emissionspartikel in Kontakt tritt.

## Claims

1. Method for gas metal arc welding,
- a wire electrode (110) being melted by an arc (120),
- the arc (120) burning between the wire electrode (110) and a workpiece (151),
- an inert gas being supplied in the form of an inert gas flow (131),
- emissions in the form of emission particles being released during the gas metal arc welding, **characterized in that**
- a gas flow (210) with at least one flow gradient is supplied in the direction of the workpiece (151) for agglomerating the emission particles, the flow gradient being produced by ultrasound and describing local turbulences in the gas flow.

2. Method according to Claim 1, the gas flow (210) having at least one temperature gradient for condensing the agglomerated emission particles.

3. Method according to Claim 2, a temperature gradient being produced by directing the gas flow (210) onto the workpiece (151).

4. Method according to Claim 3, the gas flow (210) being directed onto cooled regions (223) of the workpiece (151).

5. Method according to Claim 4, the cooled regions (223) of the workpiece (151) being cooled by means of a cooling gas flow (310).

6. Method according to Claim 5, carbon dioxide being used for the cooling gas flow (310).

7. Method according to one of Claims 4 to 6, the workpiece (151) being cooled in a region of a weld seam, in particular in a region (223) of 300 mm around the weld seam.

8. Method according to one of Claims 2 to 7, a temperature gradient being produced by a cooling area being introduced into the gas flow (210) for agglomerating the emission particles or into the inert gas flow (131).

9. Method according to Claim 8, a surface of a heat exchanger being used as the cooling area.

10. Method according to one of the preceding claims, the inert gas flow (131) being supplied annularly around the wire electrode (110) in the direction of the workpiece (151).

11. Method according to Claim 10, the gas flow (210) for agglomerating the emission particles being supplied annularly around the wire electrode (110), surrounded by the inert gas flow (131) in the direction of the workpiece (151).

12. Device for gas metal arc welding, having
- a wire electrode (110),
- an inert gas nozzle (130), which is designed to supply an inert gas in the form of an inert gas flow (131),
- emissions in the form of emission particles being released by the gas metal arc welding, **characterized in that**
the device comprises means which are designed to produce at least one flow gradient in the direction of a workpiece (151) for agglomerating the emission particles and has a gas flow nozzle (200), which is designed to supply a gas flow (210) with the at least one flow gradient in the direction of a workpiece (151), having means for generating ultrasound, at least one flow gradient being produced by the ultrasound generated.

13. Device according to Claim 12, the device having a cooling element, which is arranged in such a way that it is substantially in contact with the inert gas flow (131) and/or with the gas flow (210) for agglomerating the emission particles.

## Revendications

1. Procédé de soudage de métal sous protection gazeuse,
- un fil électrode (110) étant amené en fusion par un arc électrique (120),
- l'arc électrique (120) brûlant entre le fil électrode (110) et une pièce à usiner (151),
- un gaz protecteur étant acheminé sous la forme d'un courant de gaz protecteur (131),
- des émissions sous la forme de particules d'émission étant libérées lors du soudage de métal sous protection gazeuse,
**caractérisé en ce que**
- un courant de gaz (210) ayant au moins un gradient de courant est acheminé en direction de la pièce à usiner (151) en vue de l'agglomération des particules d'émission, le gradient de courant étant généré par des ultrasons et décrivant des turbulences locales dans le courant de gaz.

2. Procédé selon la revendication 1, le courant de gaz (210) présentant au moins un gradient de température destiné à la condensation des particules d'émission agglomérées.

3. Procédé selon la revendication 2, un gradient de température étant généré en ce que le courant de gaz (210) est amené sur la pièce à usiner (151).

4. Procédé selon la revendication 3, le courant de gaz (210) étant amené sur des zones refroidies (223) de la pièce à usiner (151).

5. Procédé selon la revendication 4, les zones refroidies (223) de la pièce à usiner (151) étant refroidies au moyen d'un courant de gaz de refroidissement (310).

6. Procédé selon la revendication 5, du dioxyde de carbone étant utilisé pour le courant de gaz de refroidissement (310).

7. Procédé selon l'une des revendications 4 à 6, la pièce à usiner (151) étant refroidie dans une zone (223) d'un cordon de soudure, notamment dans une zone (223) de 300 mm autour du cordon de soudure.

8. Procédé selon l'une des revendications 2 à 7, un gradient de température étant généré en ce qu'une surface de refroidissement est introduite dans le courant de gaz (210) servant à l'agglomération des particules d'émission ou dans le courant de gaz protecteur (131).

9. Procédé selon la revendication 8, une surface d'un échangeur de chaleur étant utilisée en tant que surface de refroidissement.

10. Procédé selon l'une des revendications précédentes, le courant de gaz protecteur (131) étant acheminé en forme d'anneau autour du fil électrode (110) en direction de la pièce à usiner (151).

11. Procédé selon la revendication 10, le courant de gaz (210) servant à l'agglomération des particules d'émission étant acheminé en forme d'anneau autour du fil électrode (110), entouré par le courant de gaz protecteur (131) en direction de la pièce à usiner (151).

12. Dispositif de soudage de métal sous protection gazeuse, comprenant
- un fil électrode (110),
- une buse à gaz protecteur (130) qui est conçue pour acheminer un gaz protecteur sous la forme d'un courant de gaz protecteur (131),
- des émissions sous la forme de particules d'émission étant libérées par le soudage de métal sous protection gazeuse,
**caractérisé en ce que**
le dispositif comprend des moyens qui sont conçus pour générer au moins un gradient de courant en direction d'une pièce à usiner (151) en vue de l'agglomération des particules d'émission et possède une buse à courant de gaz (200) qui est conçue pour acheminer un courant de gaz (210) ayant l'au moins un gradient de courant en direction d'une pièce à usiner (151), possédant des moyens pour générer des ultrasons, l'au moins un gradient de courant étant généré par les ultrasons générés.

13. Dispositif selon la revendication 12, le dispositif possédant un dissipateur de chaleur qui est disposé de telle sorte qu'il entre en contact sensiblement avec le courant de gaz protecteur (131) et/ou avec le courant de gaz (210) servant à l'agglomération des particules d'émission.
